# EUROPEAN PATENT APPLICATION

(11) **EP 2 028 788 A1**
(43) Date of publication of application: **25.02.2009**
(21) Application number: 07721291.8
(22) Date of filing: 28.05.2007
(51) Int. Cl.: H04L 12/24

(54) **A STREAM MEDIA SERVICE SYSTEM AND A REALIZATION METHOD THEREOF**

(30) Priority: 12.06.2006 CN 200610091853
(71) Applicant: Huawei Technologies Co., Ltd., Longgang District, Shenzhen, Guangdong 518129 (CN)
(72) Inventor: WANG, Shile, Guangdong 518129 (CN); JIA, Haigang, Guangdong 518129 (CN)
(74) Representative: Hengelhaupt, Jürgen
(86) International application number: PCT/CN2007/001718
(87) International publication number: WO 2007/143905

(57) **Abstract**

A circuit-switch streaming service (CSS) system includes a circuit-switch streaming service center (CSSC), and a video interworking gateway (VIG), and further includes an application server (AS), wherein, the AS connects to the CSSC via an interface and is adapted to send a video call command to the CSSC; the CSSC includes a call originating module, which responds to and identifies the video call command sent by the AS and controls the CSSC to set up a connection with the called terminal via the VIG. The CSS system disclosed by the present invention realizes active delivery of media contents to end users. It provides a good alternative for operators to operate various video services.

## Description

This application claims the priority to Chinese patent application No. 200610091853.6, entitled "System and Method for Implementing Streaming Service" and filed with the Chinese Patent Office on June 12, 2006, content of which is hereby incorporated by reference in its entirety.

### Field of the Invention

The present invention relates to a data transmission technology in the communication industry, and in particular to a system and method for implementing the streaming service.

### Background of the Invention

The circuit-switch streaming service (CSS) system is adapted to provide streaming services. It supports video on demand (VoD), live cast and downloading. The CSS system has high performance, high reliability and high scalability and is adaptable to various video and audio codes, streaming protocols and file formats.

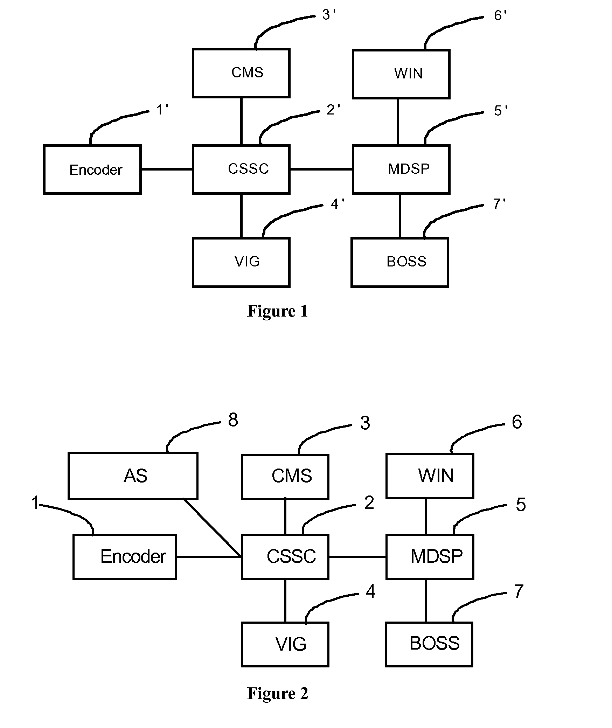

The structure of a CSS system in the prior art is shown in Figure 1. The system includes an encoder 1', a circuit-switch streaming service center (CSSC) 2', a contents management system (CMS) 3', a video interworking gateway (VIG) 4', a mobile data service platform (MDSP) 5', a wireless intelligent network (WIN) 6', and a business operation support system (BOSS) 7'.

The encoder 1' encodes and decodes media contents for the content provider (CP)/service provider (SP); the CSSC 2' is a core component of the CSS system, adapted to provide streaming services for end users; the CMS 3' provides content management for the CSSC, maintains media and associated CP/SP information, and enables the CP/SP to publish media contents; the VIG 4' implements the interworking between Session Initiation Protocol (SIP) terminals and 3G-H.324M user equipments (UEs), including the interworking of signaling, call control and bearer services; the MDSP 5' provides support for mobile data service components, manages information and service profiles of mobile data users in a centralized manner, and provides authentication and accounting for data service components; the WIN 6' and BOSS 7' work with the MDSP 5' to implement the accounting of CSS, in which the BOSS 7' handles the charging of postpaid services, and the MDSP 5' handles the charging of prepaid services and makes deductions from a prepaid account via the PPS unit in the WIN 6'.

The VIG connects to a mobile switching center (MSC) server via a time division multiplexing (TDM) E1 gateway. The MSC server regards the VIG as a special office direction when routing a call. The VIG integrates a SoftSwitch (SX) module and a universal media gateway module. The SX module implements communication and connection with the MSC server and serves as the control end of the VIG to control and manage the universal media gateway module via H.248, including media gateway registration and deregistration, status management, media gateway resource management and bearer resource management. The VIG interfaces with 3G and core networks for video interworking between heterogeneous networks. It can be deployed in a 3G network based on next generation network (NGN) architecture, to enable streaming services between a 3G-H.324M UE and a CSSC in an IP network (that is, SIP terminal).

Specifically, the basic call procedure of CCS in the prior art includes: an end user dials the special service number for streaming services to originate an ordinary H.324M video portal (VP) call; the MSC server routes the call to the VIG 4'; the VIG 4' analyzes the called number and determines it a streaming call; the VIG 4' sets up a SIP call session with the CSSC, the call command containing the media content; the CSSC interacts with the CMS via the Simple Object Access Protocol (SOAP) to obtain the data information of the content, such as the size and location of the content; the VIG 4' controls the unified message gateway (UMG) to set up a Real-Time Transport Protocol (RTP) media channel with the CSSC to obtain the content through the SIP-based Session Description Protocol (SDP), where, live contents are obtained through interaction between the CSSC and the encoder via the Real-Time Streaming Protocol (RTSP)/SDP, and on-demand contents are obtained directly from the CSSC, because on-demand contents are program files already encoded by the encoder and uploaded to the CSSC via the CMS. For on-demand contents, the CSSC plays a video menu and the user may end the streaming session through a keystroke or hook-on in the progress of menu playing or program playing. After the session is over, the VIG 4' and the CSSC both generate applicable call detail records (CDRs) for accounting.

However, the prior CSSC can only play ordered media contents reactively when the user dials a special access code. It cannot deliver media contents actively to a terminal.

### Summary of the Invention

. Embodiments of the present invention provide a method and system for implementing streaming service, which provides function of delivering streaming content to a terminal.

According to one embodiment, a CSS system includes a CSSC and a gateway and further includes an application server (AS).

The AS is connected to the CSSC and is adapted to initiate a video call command to the CSSC; and the CSSC identifies the video call command initiated by the AS, establishes, according to the video call command, a connection with a called terminal via the gateway, and sends streaming content specified by the AS to the called terminal.

According to another embodiment, a method for implementing the streaming service includes: by a CSSC, receiving a video call command initiated by an AS; by the CSSC, identifying the video call command, establishing, according to the video call command, a connection with a called terminal via a gateway, and sending streaming content specified by the AS to the called terminal.

According to still another embodiment, an AS includes: a sending module, adapted to send a video call command and streaming data so as to send specified streaming content to a terminal; a streaming media content determining module, adapted to specify the streaming content to be sent to the terminal; and a control module, adapted to implement automatic or manual control of the sending module to send the streaming content specified by the streaming content determining module to be sent, to the terminal

According to the method and system for implementing streaming service, in a CSS system, an AS controls a CSSC to originate a video call to a user or a user group and after the user answers, the user can view the media contents delivered by the CSSC, so as to realize the active delivery of media contents; the invention provides operators with a good alternative for operating services like VoD, video advertisement, video content ordering and public services.

### Brief Description of the Drawings

Figure 1 is a schematic diagram of the structure of a CSS system in the prior art;
Figure 2 is a schematic diagram of the structure of a CSS system according to an embodiment of the invention; and
Figure 3 is a service flow chart of the CSS system according to an embodiment of the invention.

### Detailed Description of the Invention

Embodiments of the present invention will be detailed below with reference to the accompanying drawings.

According to an embodiment of the invention, a CSS system adds an AS on the basis of the prior CSS system and the AS is adapted to control the CSSC to originate video calls actively to terminals. After the user answers, the user can view media contents actively delivered by the CSS system. This enables the active delivery of media contents to end users, that is, the video call service.

Video call means the CP/SP originates video calls to 3G UEs or plays ordered media contents.

Figure 2 is a schematic diagram of the structure of a CSS system according to an embodiment of the invention. As shown in Figure 2, the system includes an encoder 1, a CSSC 2, a CMS 2, a VIG 4, an MDSP 5, a WIN 6 and a BOSS 7, and an AS 8.

The CSSC 2 includes a call originating module, which is adapted to respond to the call request of the AS 8, identify the video call command sent by the AS 8, and control the CSSC 2 to originate video calls.

The AS 8 controls the logic of the video call service. When the AS 8 sends a video call command to the CSSC, the CSSC first responds to the video call command and then requests the MDSP 5 to complete authentication and accounting. After the accounting is successful, the CSSC simulates a SIP terminal to communicate with an H.324 UE over SIP via the VIG 4 and send the requested media content to the UE. In this way, the video call service is realized.

Moreover, the AS 8 and the CSSC, the CSSC and the MDSP 5, the MDSP 5 and the WIN 6, and the MDSP 5 and the BOSS 7 are connected respectively via an interface. The interface may be a standard WSI interface, an MML interface or a custom interface.

Furthermore, the encoder 1 and the CMS 3 may be built in the CSSC 2. The encoder 1 is adapted to encode and decode the media contents for the CP/SP; the CMS 3 provides content management for the CSSC, maintains media and CP/SP information and enables the CP/SP to publish media contents.

The contents played may be live contents or on-demand contents. For live contents, the CSSC interacts with the encoder 1 over RTSP/SDP to obtain the contents. For on-demand contents, the encoder 1 first encodes the contents and uploads the content file to the CSSC via the CMS 3. This procedure is a part of the prior art and will not be detailed herein.

Specifically, the SP sends a video call command to the CSSC via the AS 8 (the command carries a called number and the requested content); the call originating module of the CSSC parses the video call command to obtain the called number and the requested content; the CSSC interacts with the CMS 3 over SOAP to obtain information related to the requested content (such as the location and size of the content) and sends an authentication and accounting request to the MDSP 5; after the authentication and accounting succeed, the call originating module converts the video call command into a SIP request (SIP INVITE) message (which includes SDP information) and sends the request to the VIG4; the VIG 4 sets up a connection with the called UE and returns a response message to the CSSC; the CSSC obtains the media content specified by the AS 8 and streams the content to the UE. After the content is played, the CSSC reports accounting information to the MDSP 5 and generates a CDR. After the CSSC completes the call attempt, the CSSC forwards the user response (Normal, Busy or Timeout) to the AS 8, and the AS 8 determines subsequent handling according to the user response and the retry policy.

According to the above embodiment of the invention, in the CSS system, an AS is added on the basis of the prior CSS system and a call originating module is added to the CSSC. The SP sends a video call command to the CSSC via the AS. The call originating module in the CSSC parses the command and sends an authentication and accounting request to the MDSP according to the command parameters. If the authentication and accounting are successful, the call originating module controls the CSSC to simulate a SIP terminal and communicate with the VIG via SIP. The CSSC obtains the content specified by the AS from the encoder and streams the content to the called UE. This enables the CP/SP to originate video calls to specified UEs or play ordered media contents. The video call service is thus realized.

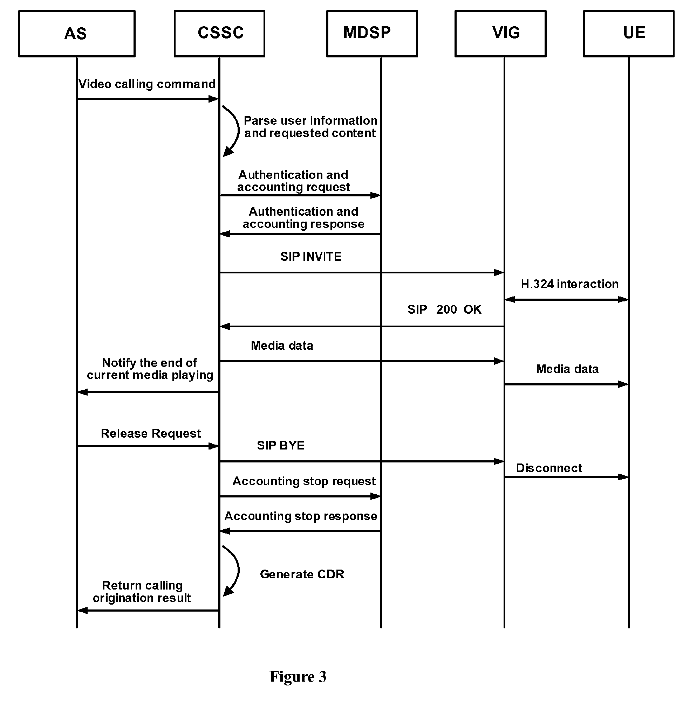

A method for implementing the streaming service according to an embodiment of the invention is detailed below with reference to Figure 3. The method includes:

1: The SP sends a video call command to the CSSC via the AS. The command carries a called number and the requested content.

The video call command sent by the AS to the CSSC includes the information of only one caller and one callee. Preferably, multiple video call commands, each including the identifier of a related UE, are sent at a time for originating calls to different UEs. In this way, the AS can send multiple video call commands to the CSSC simultaneously and the CSSC can originate calls to multiple UEs simultaneously.

2: The CSSC sends an authentication and accounting request to the MDSP.

Step 2 further includes:

21: Upon reception of the video call command from the AS, the CSSC parses the command to obtain the command parameters (called number and requested content) and sends an authentication and accounting request to the MDSP according to the command parameters.

3: If the authentication and accounting are successful, or when the MDSP sends an authentication and accounting response to the CSSC, the CSSC sends a SIP INVITE (which includes SDP information that describes media data attributes) to the VIG; or else the MDSP sends an authentication and accounting failure message to end the session.

Herein, the INVITE message sent by the CSSC includes SDP information. The UE initializes itself and waits for receiving media data according to the media data attributes described in the SDP information.

The SIP INVITE message in the video call service is described according to an embodiment of the invention. For example, suppose the CSS calling number is 6690010 and the called number is 6680080, when the CSSC notifies the UE to receive audio data at UDP port 17424, the command is as follows:
INVITE sip:6680080@182.20.100.100:5060 SIP/2.0 // SIP INVITE
Via: SIP/2.0/UDP 182.20.100.198:5060;branch=z9hG4bKD82 //protocol, address and port of SIP Proxy, and session ID
From: <sip:6690010@182.20.100.198>;tag=E83CA64-1CA0 //identifier of the caller
To: <sip:6680080@182.20.100.100> //identifier of the callee
Content-Type: application/sdp //type of the message body
Content-Length: 256 //length of the message body in octets
v=0 //SDP version
o=CiscoSystemsSIP-GW-UserAgent 2237 2134 IN IP4 182.20.100.198 //session creator, session ID, session version, protocol type of address, and address
s=SIP Call //name of the session
c=IN IP4 182.20.100.198//connection information
t=0 0 //time segment for obtaining the session set
m=audio 17424 RTP/AVP 18 8 0 //description of the streaming media: type, port, and format desired by the caller
c=IN IP4 182.20.100.198
a=rtpmap:18 G729/8000 //media level attribute is rtpmap
a=fmtp:18 annexb=no //session level attribute is fmtp
a=rtpmap:8 PCMA/8000
a=rtpmap:0 PCMU/8000

4: The VIG interacts with the H.324 UE and sends a SIP 200 OK message to the CSSC.

5: The CSSC interacts with the VIG over SIP and sends media data to the UE via the VIG.

51: When the media data is played, the user may strike keys of the UE as prompted to finish intended operations.

The keystroke operations are included in the prior art and therefore not detailed herein.

6: After the media data is played, the CSSC sends a notification to the AS, notifying the end of current playing and requesting new media contents or release of the call.

7: The AS notifies the CSSC to release the call (or the UE sends a Disconnect message), and the CSSC sends a SIP BYE to the VIG and disconnects the UE via the VIG; the CSSC reports call information to the MDSP and generates a CDR according to the accounting result returned by the MDSP.

8: The CSSC sends a Release Response to the AS.

Step 8 further includes:

81: After the CSSC completes the call attempt, the CSSC forwards the user response (Normal, Busy or Timeout) to the AS and the AS determines subsequent handling according to the user response and the retry policy.

According to the above embodiment of the invention, in the method for implementing the streaming service, because an AS is added, the SP first sends a video call command to the CSSC via the AS. The CSSC parses the command to obtain related command parameters and sends an authentication and accounting request to the MDSP according to the command parameters. If the authentication and accounting are successful, the CSSC simulates a SIP terminal to send a SIP INVITE to the VIG and stream the content specified by the AS to the UE. This enables the CP/SP to originate video calls to specified UEs or play ordered media contents. The video call service is thus realized.

The authentication and accounting for a PPS user vary from the procedure shown in Figure 3 in some aspects. For PPS, there are pre-deduction and refund actions, like the pre-authorization of a credit card. Pre-deductions are made on a periodical basis and the MDSP will send deduction requests to the PPS unit in real time. When a call session is over, the amount pre-deducted that is not consumed will be refunded.

The following describes an application scenario of the CSS system for implementing the video call service according to an embiment.

User A orders mobile news and the ordered news is delivered at 8:00 a.m. every day. The AS sends a video call command to the CSSC at 8:00 a.m. and specifies the media content; the CSSC originates a call to user A by sending an INVITE message to the VIG; if user A answers, the VIG notifies the CSSC that the call is connected and the CSSC delivers the media content; user A will then see the news. The video call service is thus realized.

However, after the CSSC originates a video call, the call may fail for certain reasons (for example, the UE is busy, the UE is unreachable, the UE is roaming in a 2G network, or the UE is powered off). In this case, the CSS or the AS may retry within a certain period of time. For instance, when user A is engaged in another call or powered off, the call fails and a retry will be made according to the retry policy.

Some retry policies are provided below for the CSS system according to an embodiment of the invention.

### (1) CSSC retry

A retry module is built in the AS to control the call originating module in the CSSC to retry when a call attempt of the CSSC fails. When the AS sends a video call command to the CSSC, the retry module lets the command carry the Retry Times and Retry Interval parameters. When a call attempt of the CSSC fails, the CSSC retries according to the parameters and sends the result to the AS.

### (2) AS retry

The AS further includes a responding module. The module responds to the user response reported after the call originating module of the CSSC originates a call, and determines the subsequent action according to the user response. Retry parameters may be set in the responding module. When a call attempt fails, different retry policies may be adopted according to the failure reason. After the CSSC completes a call attempt, the CSSC reports the user response (Normal, Busy or Timeout) to the AS. If the call attempt fails, different retry policies can be adopted according to the failure reason. For example, if the UE is busy, a retry may be made 5 minutes later; if the UE is powered off, a retry may be made 30 minutes later.

The AS supports flexible retry policies and the retry policies have little impact on the CSSC.

In addition, according to an embodiment of the invention, the CSS system provides a service handling interface in the BOSS. The interface may be a standard WSI interface, an MML interface or a custom interface. Peripheral systems, like short message service (SMS), unstructured supplementary service data (USSD), interactive voice response (IVR) and end-user portal, all use the interface provided by the BOSS to realize the handling of the streaming service.

Service handling include: user A orders a specific video program for user B; a user orders videos of a specific content that are periodically delivered, such as movie trailers, news and sports; a corporate user orders a specific duration for playing an advertisement to its customers.

For example, in an SMS, the CSS system handles the service in this way: user M orders a specific video by sending a short message; the short message triggers the AS to send a video call command to the CSSC at the specified time and specify the media content; the CSSC originates a call to user M by sending an INVITE message to the VIG; when user M answers, the VIG notifies the CSSC that the call is connected and the CSSC delivers the media content; user M receives the ordered video. The video call service is thus realized.

In addition, according to other embodiments of the invention, the CSS system supports different charging modes, including free of charge, monthly fee, content-based charging, duration-based charging and their combinations.

In embodiments of the invention, only the 3G UE (H.324 UE) is described for exemplary purposes. The terminal of the present invention, however, is not limited to this. It may also be a SIP terminal, or an H.323 soft terminal.

It seems obvious for person skilled in the art that various modules and procedures in the embodiments of the present invention may be implemented with normal computing apparatus. These modules and procedures may be arranged and performed either on a single computing apparatus or distributed on a network formed by multiple computing apparatus. Optionally, these modules and procedures may be implemented with executable application codes of an apparatus so that they can be stored in a storage apparatus and performed by a computing apparatus, or they can be designed into multiple integrated circuit modules, or multiple modules or procedures there-among can be designed into a single integrated circuit module for implementation. Therefore, the invention is not limited to combination of any specified software and hardware.

To conclude, in embodiments of the invention, an AS is added to the CSS system so that the SP can send a video call command to the CSSC via the AS and that the CSSC can stream multimedia contents to terminals actively. The video call service is thus realized. For example, the CSSC can originate a video call (for example, to a 3G user or a 3G user group) and when the user answers, the user can view the media content actively delivered by the CSSC; the video call service capability of the CSS system provides a good alternative for operators to operate VoD (for example, user A demands a video clip for user B and the video clip is played actively to user B at the specified time), video advertisement (for example, deliver a video advertisement to users actively), video content ordering (for example, a user orders some video news and the news is delivered to the user at the specified time every day) and public services.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A circuit-switch streaming service (CSS) system, comprising a circuit-switch streaming service center (CSSC), and a gateway, and further comprising an application server (AS), wherein:
the AS is connected to the CSSC and is adapted to initiate a video call command to the CSSC; and
the CSSC identifies the video call command initiated by the AS, establishes, according to the video call command, a connection with a called terminal via the gateway, and sends streaming content specified by the AS to the called terminal.

2. The system of claim 1, wherein the CSSC comprises a call originating module, wherein the call originating module converts the video call command into a SIP request message, and sends the SIP request message to the called terminal via the gateway.

3. The system of claim 1, further comprising a content management unit adapted to manage streaming content and/or information of maintenance content provider/ service provider, and/or published streaming content; wherein
the CSMSC interacts with the content management unit and acquires related information of the streaming content specified by the AS.

4. The system of claim 1, wherein the AS comprises a retry module adapted to manage the call originating module to retry, according to set retry times/retry interval, when a call attempt fails.

5. The system of claim 1, wherein the video call command comprises a called number and information of streaming content specified to be played.

6. The system of claim 1, wherein the AS is connected to the CSSC via one of the following interfaces:
service mutual operational organizing interface, man-machine speech interface, or user customized interface.

7. The system of claim 1, wherein the AS comprises a responding module adapted to respond to the message reported by the call originating module to the AS after a call attempt is complete, and/or .retry when a call attempt fails.

8. The system of claim 1, wherein the terminal is an H.3234 terminal, a SIP terminal or an H.323 soft terminal.

9. The system of claim 1, further comprising a mobile data service platform (MDSP) connected to the CSSC via an interface and adapted to implement authentication and accounting of the streaming service.

10. A method for implementing the streaming service, comprising:
by a circuit-switch streaming service center (CSSC), receiving a video call command initiated by a application server (AS);
by the CSSC, identifying the video call command, establishing, according to the video call command, a connection with a called terminal via a gateway, and sending streaming content specified by the AS to the called terminal.

11. The method of claim 10, wherein the video call command comprises a called number and the requested streaming content.

12. The method of claim 10, wherein the establishing, according to the video call command, a connection with a called terminal via a gateway, and sending streaming content specified by the AS to the called terminal, comprise:
by the CSSC, converting the video call command into a SIP request and sending the SIP request to the VIG;
by the VIG, interacting with the terminal and sending a response to the CSSC;
by the CSSC, interacting with the SIP of the gateway and sending streaming data to the terminal via the gateway;

13. The method of claim 12, further comprising:
sending, by the CSSC an authentication and accounting request to mobile data service platform MDSP, and if the authentication and accounting are successful, sending the streaming content to the terminal; otherwise, returning an authentication and accounting failure response.

14. The method of claim 13, wherein upon reception of the video call command from the AS, the CSSC parses the command to obtain the parameters and sends an authentication and accounting request to the MDSP according to the command parameters.

15. The method of claim 13, wherein after sending the streaming content to the terminal, the CSSC reports call information to the MDSP and generates a call detail record (CDR) according to the accounting result returned by the MDSP.

16. The method of claim 12, wherein the AS sends multiple video call commands to the CSSC simultaneously and the CSSC originates video calls to multiple terminals simultaneously, each video call command comprising a corresponding identifier parameter of the terminal.

17. The method of claim 12, wherein, the video call command comprises the parameter of Retry Times or Retry Interval and when a call attempt fails, the CSSC retries according to the Retry Times and/or Retry Interval and returns the result to the AS.

18. The method of claim 12, wherein after completing a call attempt, the CSSC sends a user response to the AS and the AS retries if the user response indicates failure.

19. An application server (AS), comprising:
a sending module, adapted to send a video call command and streaming data so as to send specified streaming content to a terminal;
a streaming media content determining module, adapted to specify the streaming content to be sent to the terminal; and
a control module, adapted to implement automatic or manual control of the sending module to send the streaming content specified by the streaming content determining module to be sent, to the terminal.
